# EUROPEAN PATENT APPLICATION

(11) **EP 4 841 029 A1**
(43) Date of publication of application: **18.11.2026**
(21) Application number: 25738776.1
(22) Date of filing: 08.01.2025
(51) Int. Cl.: E02F 9/20

(54) **HYDRAULIC DRIVE SYSTEM**

(30) Priority: 12.01.2024 JP 2024003545
(71) Applicant: Hitachi Construction Machinery Co., Ltd., Tokyo 110-0015 (JP)
(72) Inventor: KUMAGAI, Kento, Tsuchiura-shi, Ibaraki 300-0013 (JP); AMANO, Hiroaki, Tsuchiura-shi, Ibaraki 300-0013 (JP); AKITA, Taro, Tsuchiura-shi, Ibaraki 300-0013 (JP); KANEHAMA, Mitsuhiko, Tsuchiura-shi, Ibaraki 300-0013 (JP)
(74) Representative: MERH-IP Matias Erny Reichl Hoffmann Patentanwälte PartG mbB
(86) International application number: PCT/JP2025/000343
(87) International publication number: WO 2025/150508

(57) **Abstract**

The hydraulic drive system includes a directional control valve controlling a supply direction of the hydraulic oil to the hydraulic actuator, a flow rate control valve controlling a flow rate of the hydraulic oil to be supplied from the hydraulic pump to the directional control valve, a solenoid valve that opens and closes the flow rate control valve, and a controller configured to execute a calibration process to adjust a command current to be output to the solenoid valve. In the calibration process, the controller varies the command current to be output to the solenoid valve in a direction to open the flow rate control valve with the flow rate control valve closed and the directional control valve opened, and identifies the command current at a time when the pressure detected by a pressure sensor changes as an opening start current at which the flow rate control valve starts opening.

## Description

### TECHNICAL FIELD

The present invention relates to a hydraulic drive system for driving a hydraulic actuator.

### BACKGROUND ART

Conventionally, a work machine, such as a hydraulic excavator, dump truck, or wheel loader, is equipped with a hydraulic drive system including a hydraulic actuator, a hydraulic pump for discharging hydraulic oil, and a plurality of valves for controlling a supply direction and supply amount of the hydraulic oil discharged from the hydraulic pump.

As an example of this type of hydraulic drive system, Patent Literature 1 discloses a configuration including: a directional control valve that is disposed in a supply line extending from a hydraulic pump to a hydraulic actuator and controls a supply direction of the hydraulic oil for the hydraulic actuator; a flow rate control valve that is disposed upstream of a hydraulic oil flow from the directional control valve in a supply line and controls a flow rate of the hydraulic oil supplied from the hydraulic pump to the directional control valve; and a solenoid valve that opens and closes the flow rate control valve.

### CITATION LIST

### PATENT LITERATURE

Patent Literature 1: JP-B-7193446

### SUMMARY OF INVENTION

### TECHNICAL PROBLEM

In the hydraulic drive system having the configuration described above, the opening amount of the flow rate control valve in response to a command current output to the solenoid valve may vary due to manufacturing errors and the like. For such variations, calibration is required to adjust the magnitude of the command current and the opening amount of the flow rate control valve.

As a possible method, a pressure sensor may be attached to the output side of the solenoid valve to measure the output characteristics of the pilot pressure. However, in the case where the solenoid valve is integrated into the flow rate control valve, it is difficult to attach the pressure sensor to the output side of the solenoid valve. Another possible method is to measure the pressure between the flow rate control valve and the directional control valve to perform calibration. However, actual operation of the work machine does not necessarily require a pressure sensor installed between the flow rate control valve and the directional control valve. Therefore, having to attach and detach the pressure sensor every time calibration is performed would require a significant amount of labor.

The present invention has been made in view of the circumstances described above, and its object is to provide a hydraulic drive system capable of calibration without attaching dedicated components.

### SOLUTION TO PROBLEM

To achieve the object described above, the present invention provides a hydraulic drive system comprising: a hydraulic pump that discharges a hydraulic oil stored in a hydraulic oil tank; a hydraulic actuator driven by the hydraulic oil discharged from the hydraulic pump; a directional control valve disposed in a supply line extending from the hydraulic pump to the hydraulic actuator, and controlling a supply direction of the hydraulic oil to the hydraulic actuator; a flow rate control valve disposed upstream of the directional control valve in the supply line of the hydraulic oil, and controlling a flow rate of the hydraulic oil to be supplied from the hydraulic pump to the directional control valve; a pressure sensor that detects a pressure of the hydraulic oil to be supplied to the hydraulic actuator; a solenoid valve that opens and closes the flow rate control valve by supplying a pilot pressure to a pilot port of the flow rate control valve; and a controller configured to execute a calibration process to adjust a command current to be output to the solenoid valve, wherein, in the calibration process, the controller: varies the command current to be output to the solenoid valve in a direction to open the flow rate control valve, with the flow rate control valve closed and the directional control valve opened; and identifies the command current at a time when the pressure detected by the pressure sensor changes as an opening start current at which the flow rate control valve starts opening.

### ADVANTAGEOUS EFFECTS OF INVENTION

According to the present invention, it is possible to obtain a hydraulic drive system capable of calibration without attaching dedicated components. Other problems, configurations, and effects not described above will be clarified in the following description of embodiments.

### BRIEF DESCRIPTION OF DRAWINGS

[FIG. 1] FIG. 1 is a side view of a hydraulic excavator.
[FIG. 2] FIG. 2 illustrates a part of a circuit diagram of a hydraulic drive system.
[FIG. 3] FIG. 3 illustrates a further part of a circuit diagram of a hydraulic drive system.
[FIG. 4] FIG. 4 is a cross-sectional view of a flow rate control valve.
[FIG. 5] FIG. 5 is an opening area characteristic diagram of a flow rate control valve.
[FIG. 6] FIG. 6 is a functional block diagram of a controller.
[FIG. 7] FIG. 7 is an explanatory diagram of performance error of a solenoid valve.
[FIG. 8] FIG. 8 is a flowchart of a calibration process.
[FIG. 9] FIG. 9 is a diagram illustrating temporal variation of a command current and change in load pressure with respect to the command current during a calibration process.

### DESCRIPTION OF EMBODIMENTS

### [Configuration of hydraulic excavator 200]

An embodiment of a hydraulic excavator 200 (work machine) according to the present invention will be described with reference to the drawings. However, a specific example of a work machine is not limited to the hydraulic excavator 200, and it may be any machine equipped with a hydraulic actuator, such as a wheel loader, dump truck, or crane vehicle. Unless otherwise specified, the front, rear, left, and right referred herein are based on the viewpoint of an operator who boards and operates the hydraulic excavator 200.

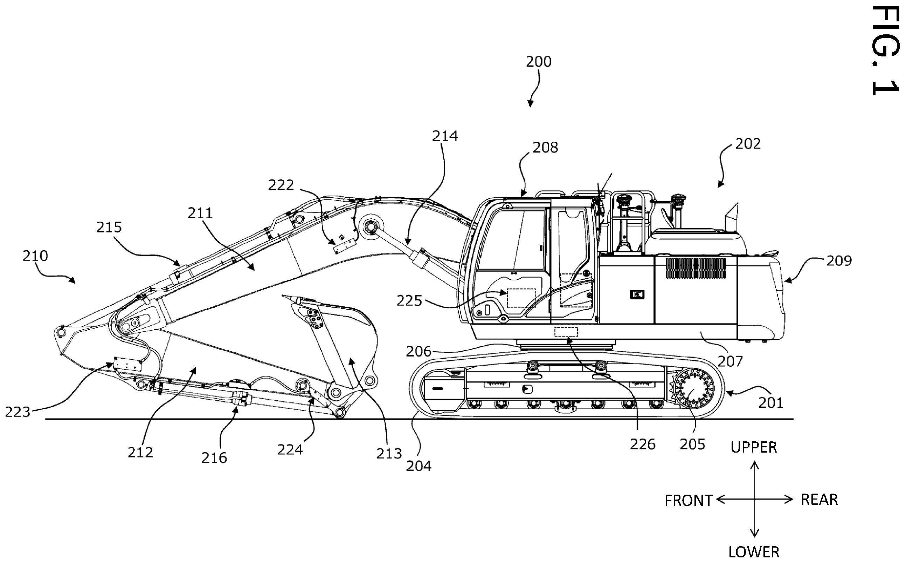

FIG. 1 is a side view of the hydraulic excavator 200. As illustrated in FIG. 1, the hydraulic excavator 200 includes an undercarriage 201, and an upperstructure 202 supported by the undercarriage 201. The undercarriage 201 and the upperstructure 202 are examples of vehicle bodies.

The undercarriage 201 includes a pair of left and right crawlers 204, which are endless tracks. The left and right crawlers 204 are rotated, respectively and independently, by the drive of travel motors 205, causing the hydraulic excavator 200 to travel. However, the undercarriage 201 may be of a wheeled type instead of using the crawlers 204.

The upperstructure 202 is supported on the undercarriage 201 so as to be capable of swinging by a swing motor 206. In other words, in response to the rotation of the swing motor 206, the upperstructure 202 swings relative to the undercarriage 201. The upperstructure 202 mainly includes a swing frame 207 serving as a base, a cab (operator's seat) 208 disposed on the front left side of the swing frame 207, a counterweight 209 disposed at the rear of the swing frame 207, and a front working device 210 (working device) mounted on the front center of the swing frame 207 so as to be capable of pivoting in the upper and lower direction.

The cab 208 is disposed adjacent to the front working device 210 in the left and right direction (width direction of the vehicle body). More specifically, the cab 208 is disposed on the left side (one side in the left and right direction) of the front working device 210. However, where to dispose the cab 208 is not limited to the example above, and the cab 208 may be disposed on either side of the front working device 210 in the left and right direction.

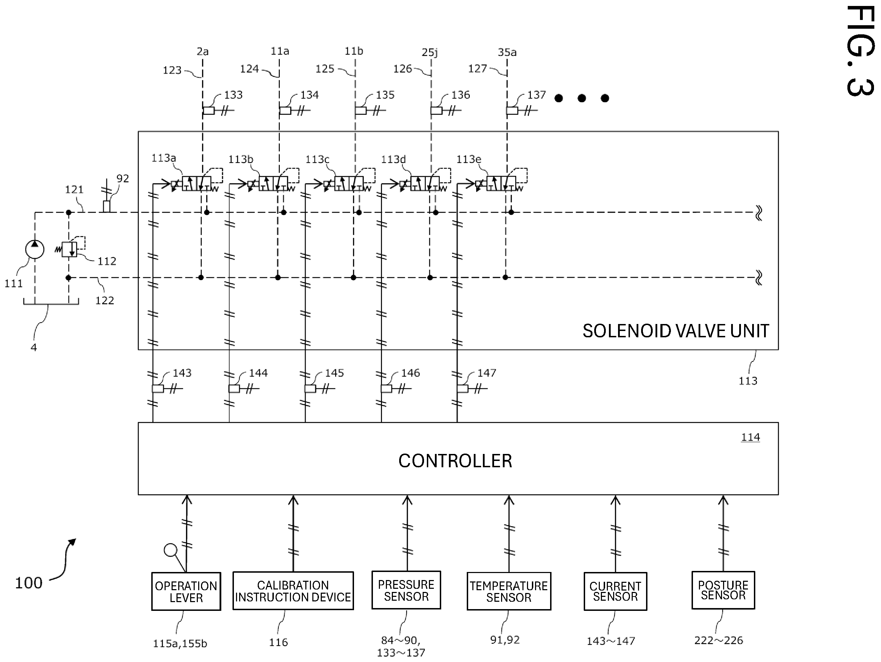

In the cab 208, a space is formed for the operator to board and operate the hydraulic excavator 200. Inside the cab 208, a seat for the operator to sit on and an operation device operated by the operator who is sitting on the seat are disposed. The operation device accepts commands made by the operator to operate the hydraulic excavator 200. In response to the commands made by the operator for the operation device, the undercarriage 201 travels, the upperstructure 202 swings, and the front working device 210 operates. The operation device includes at least operation levers 115a, 115b illustrated in FIG. 3. Specific examples of the operation device are a lever, steering wheel, pedal, switch, and the like.

The front working device 210 includes a boom 211 supported on the upperstructure 202 so as to be capable of raising and lowering, an arm 212 supported at the distal end of the boom 211 so as to be pivotable (crowding and dumping), a bucket 213 (attachment) supported at the distal end of the arm 212 so as to be pivotable (crowding and dumping), a boom cylinder 214 for driving the boom 211, an arm cylinder 215 for driving the arm 212, and a bucket cylinder 216 for driving the bucket 213. The specific example of the attachment is not limited to the bucket 213, and may be a grapple, cutter, crusher, breaker, or the like. The counterweight 209 is a heavy object having an arcuate shape when viewed from above, provided for balancing the weight of the front working device 210.

The travel motors 205, the swing motor 206, the boom cylinder 214, the arm cylinder 215, and the bucket cylinder 216 are examples of hydraulic actuators. That is, the hydraulic actuators include one or both of hydraulic motors that rotate in response to the supply of the hydraulic oil and hydraulic cylinders that extend and contract in response to the supply and discharge of the hydraulic oil. However, specific examples of hydraulic actuators are not limited to the examples above.

### [Configuration of hydraulic drive system 100]

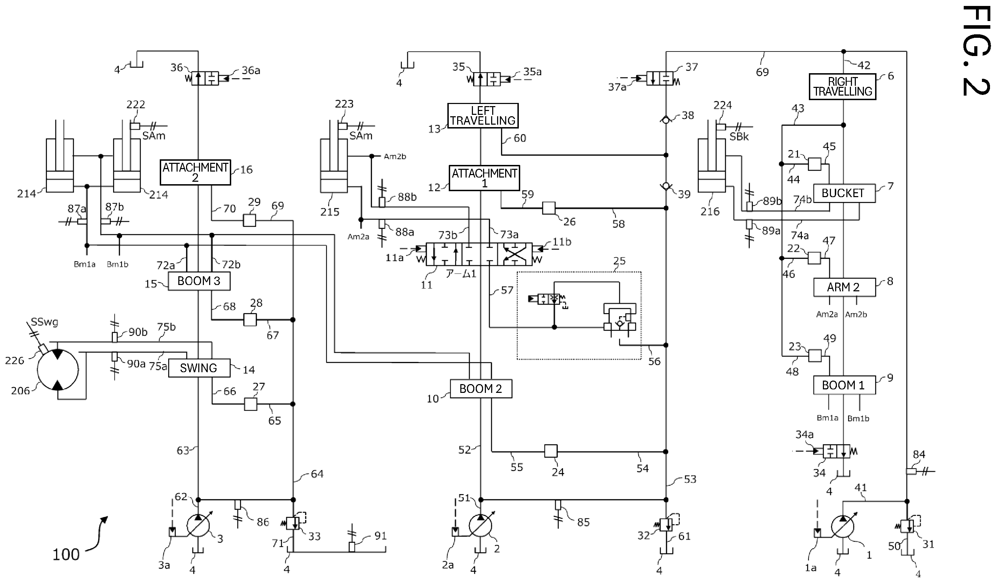

FIG. 2 illustrates a part of a circuit diagram of a hydraulic drive system 100. FIG. 3 illustrates another part of the circuit diagram of the hydraulic drive system 100. The hydraulic excavator 200 includes the hydraulic drive system 100 illustrated in FIG. 2 and FIG. 3. The hydraulic drive system 100 is a system for driving hydraulic actuators (for example, the travel motors 205, swing motor 206, boom cylinder 214, arm cylinder 215, and bucket cylinder 216).

As illustrated in FIG. 2, the hydraulic drive system 100 includes three hydraulic pumps 1, 2, 3, and a hydraulic oil tank 4 that stores the hydraulic oil discharged from the hydraulic pumps 1 to 3. The hydraulic pumps 1 to 3 are driven by an engine, which is not illustrated, to discharge the hydraulic oil stored in the hydraulic oil tank 4 toward the hydraulic actuators. The hydraulic pumps 1 to 3 are variable displacement hydraulic pumps whose discharge capacity (for example, swash plate angle) can be changed. The discharge capacity (swash plate angle) of each of the hydraulic pumps 1 to 3 is controlled by a regulator attached to each of the hydraulic pumps 1 to 3. Each regulator of the hydraulic pumps 1 to 3 includes flow rate control command pressure ports 1a, 2a, 3a.

The hydraulic drive system 100 includes a right travelling directional control valve 6, a bucket directional control valve 7, a second arm directional control valve 8, a first boom directional control valve 9, a second boom directional control valve 10, a first arm directional control valve 11, a first attachment directional control valve 12, a left travelling directional control valve 13, a swing directional control valve 14, a third boom directional control valve 15, and a second attachment directional control valve 16. The directional control valves 6 to 16 are disposed in supply lines (oil passages 44 to 49, 54 to 59, 65 to 70) extending from the hydraulic pumps 1 to 3 to the hydraulic actuators. The directional control valves 6 to 16 control the supply direction of the hydraulic oil discharged from the hydraulic pumps 1 to 3 to the corresponding hydraulic actuators.

The discharge line 41 of the hydraulic pump 1 is connected to the hydraulic oil tank 4 via a center bypass line 42. In the center bypass line 42, in order from the upstream side of the hydraulic oil flow, the right travelling directional control valve 6 for controlling the right travel motor 205, the bucket directional control valve 7 for controlling the flow of the pressure oil supplied to the bucket cylinder 216, the second arm directional control valve 8 for controlling the flow of the pressure oil supplied to the arm cylinder 215, and the first boom directional control valve 9 for controlling the flow of the pressure oil supplied to the boom cylinder 214 are disposed.

The supply ports of the bucket directional control valve 7, second arm directional control valve 8, and first boom directional control valve 9 are connected in parallel to a parallel line 43 branched from the center bypass line 42 connecting the right travelling directional control valve 6 and the bucket directional control valve 7, via oil passages 44, 45, oil passages 46, 47, and oil passages 48, 49, respectively. At the most downstream end of the center bypass line 42, a bleed off valve 34 is disposed to control the flow of the pressure oil discharged from the center bypass line 42 to the hydraulic oil tank 4. Furthermore, the discharge line 41 is connected to the hydraulic oil tank 4 via an oil passage 50 provided with a relief valve 31 for protecting the circuit from excessive pressure rise.

A discharge line 51 of the hydraulic pump 2 is connected to the hydraulic oil tank 4 via a center bypass line 52. In the center bypass line 52, in order from the upstream side of the hydraulic oil flow, the second boom directional control valve 10 for controlling the flow of the pressure oil supplied to the boom cylinder 214, the first arm directional control valve 11 for controlling the flow of the pressure oil supplied to the arm cylinder 215, the first attachment directional control valve 12 for controlling the flow of the pressure oil supplied to a first actuator, which is not illustrated, for driving a special attachment such as a crusher provided instead of the bucket 213, and the left travelling directional control valve 13 for controlling the drive of the left travel motor 205 are disposed.

The supply ports of the second boom directional control valve 10, first arm directional control valve 11, first attachment directional control valve 12, and left travelling directional control valve 13 are connected in parallel to a parallel line 53 branched from the discharge line 51 via oil passages 54, 55, oil passages 56, 57, oil passages 58, 59, and an oil passage 60, respectively. At the most downstream end of the center bypass line 52, a bleed off valve 35 is disposed to control the flow of the pressure oil discharged from the center bypass line 52 to the hydraulic oil tank 4. The lines 41, 53 are connected to each other via an oil passage 69 provided with the merging valve 37, and check valves 38, 39 are provided in the lines 41, 53 to prevent backflow from each line. The parallel line 53 is connected to the hydraulic oil tank 4 via an oil passage 61 provided with a relief valve 32 for protecting the circuit from excessive pressure rise.

A discharge line 62 of the hydraulic pump 3 is connected to the hydraulic oil tank 4 via a center bypass line 63. In the center bypass line 63, in order from the upstream side of the hydraulic oil flow, the swing directional control valve 14 for controlling the flow of the pressure oil supplied to the swing motor 206 for driving the upperstructure 202, the third boom directional control valve 15 for controlling the flow of the pressure oil supplied to the boom cylinder 214, and the second attachment directional control valve 16 are disposed. The second attachment directional control valve 16 is used to control the flow of the pressure oil supplied to a second actuator in the case where a second special attachment equipped with the second actuator is mounted in addition to the first special attachment, or in the case where the second special attachment equipped with the two actuators, the first actuator and the second actuator, is mounted instead of the first special actuator.

The supply ports of the swing directional control valve 14, third boom directional control valve 15, and second attachment directional control valve 16 are connected in parallel to a parallel line 64 branched from the discharge line 62 via oil passages 65, 66, oil passages 67, 68, and oil passages 69, 70, respectively. At the most downstream end of the center bypass line 63, a bleed off valve 36 is disposed to control the flow of the pressure oil discharged from the center bypass line 63 to the hydraulic oil tank 4. The parallel line 64 is connected to the hydraulic oil tank 4 via an oil passage 71 provided with a relief valve 33 for protecting the circuit from excessive pressure rise.

The oil passages 44 to 49, 54 to 59, and 65 to 70 are examples of the supply lines extending from the hydraulic pumps 1 to 3 to the hydraulic actuators. The bleed off valve 34, 35, 36 are examples of the opening and closing devices that open and close the center bypass line 42, 52, 63 extending from the hydraulic pumps 1 to 3 via the directional control valves 6 to 16 to the hydraulic oil tank 4.

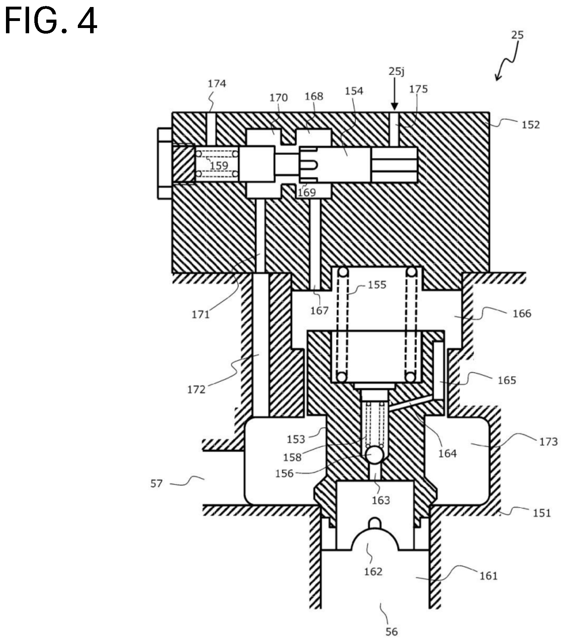

The hydraulic drive system 100 includes flow rate control valves 21, 22, 23, 24, 25, 26, 27, 28, 29. The flow rate control valves 21 to 29 are disposed upstream of the directional control valves 6 to 16 in the supply lines (oil passages 44 to 49, 54 to 59, 65 to 70) of the hydraulic oil. The flow rate control valves 21 to 29 control the flow rate of the hydraulic oil supplied from the hydraulic pumps 1 to 3 to the directional control valves 6 to 16. Details of the flow rate control valves 21 to 29 will be described later with reference to FIG. 4.

The bucket flow rate control valve 21 is provided in the oil passages 44, 45 connected to the supply port of the bucket directional control valve 7. The second arm flow rate control valve 22 is provided in the oil passages 46, 47 connected to the supply port of the second arm directional control valve 8. The first boom flow rate control valve 23 is provided in the oil passages 48, 49 connected to the supply port of the first boom directional control valve 9.

The second boom flow rate control valve 24 is provided in the oil passages 54, 55 connected to the supply port of the second boom directional control valve 10. The first arm flow rate control valve 25 is provided in the oil passages 56, 57 connected to the supply port of the first arm directional control valve 11. The first attachment flow rate control valve 26 is provided in the oil passages 58, 59 connected to the supply port of the first attachment directional control valve 12.

The swing flow rate control valve 27 is provided in the oil passages 65, 66 connected to the supply port of the swing directional control valve 14. The third boom flow rate control valve 28 is provided in the oil passages 67, 68 connected to the supply port of the third boom directional control valve 15. The second attachment flow rate control valve 29 is provided in the oil passages 69, 70 connected to the supply port of the second attachment directional control valve 16.

As illustrated in FIG. 3, the hydraulic drive system 100 includes a pilot pump 111, a pilot relief valve 112, and a solenoid valve unit 113. The pilot pump 111 is connected to the hydraulic oil tank 4 via the pilot relief valve 112 for generating primary pilot pressure. The pilot pump 111 is also connected to the solenoid valve unit 113 via an oil passage 121. The pilot pump 111 compresses the hydraulic oil stored in the hydraulic oil tank 4 to output pilot pressure to the solenoid valve unit 113.

The solenoid valve unit 113 includes a plurality of solenoid valves 113a, 113b, 113c, 113d, 113e. The solenoid valve 113a is connected to a flow rate control command pressure port 2a of the regulator of the hydraulic pump 2 via a pilot line 123. The solenoid valves 113b, 113c are connected to command pressure ports 11a, 11b of the first arm directional control valve 11 via pilot lines 124, 125, respectively. The solenoid valve 113d is connected to a command pressure port 25j of the first arm flow rate control valve 25 via a pilot line 126. The solenoid valve 113e is connected to a command pressure port 35a of the bleed off valve 35 via a pilot line 127. Furthermore, the solenoid valves 113a to 113e are connected to the hydraulic oil tank 4 via an oil passage 122.

The solenoid valve 113d is a solenoid proportional valve whose opening is adjusted according to the command current output from a controller 114. The solenoid valve 113d supplies the pilot pressure to the command pressure port 25j (pilot port) of the first arm flow rate control valve 25 in accordance with the commands of the controller 114. More specifically, the pilot pressure supplied by the solenoid valve 113d increases as the command current increases, which causes the first arm flow rate control valve 25 to open and close. The same applies to the other solenoid valves 113a to 113c and 113e.

To avoid an overly complicated explanation, the solenoid valves for the hydraulic pump 1, hydraulic pump 3, right travelling directional control valve 6, bucket directional control valve 7, second arm directional control valve 8, first boom directional control valve 9, second boom directional control valve 10, first attachment directional control valve 12, left travelling directional control valve 13, swing directional control valve 14, third boom directional control valve 15, second attachment directional control valve 16, bucket flow rate control valve 21, second arm flow rate control valve 22, first boom flow rate control valve 23, second boom flow rate control valve 24, first attachment flow rate control valve 26, swing flow rate control valve 27, third boom flow rate control valve 28, second attachment flow rate control valve 29, bleed off valve 34, bleed off valve 36, and merging valve 37 are not illustrated herein.

As illustrated in FIG. 2 and FIG. 3, the hydraulic drive system 100 includes pressure sensors 84, 85, 86, 87a, 87b, 88a, 88b, 89a, 89b, 90a, 90b, 133, 134, 135, 136, 137. The pressure sensors 84 to 90 and 133 to 137 detect the pressure (for example, discharge pressure, actuator pressure, load pressure, flow rate control command pressure, command pressure) of the hydraulic oil flowing through the flow path and output pressure signals indicating the detected pressure to the controller 114.

The pressure sensor 84 detects the discharge pressure of the hydraulic pump 1 on the discharge line 41. The pressure sensor 85 detects the discharge pressure of the hydraulic pump 2 on the discharge line 51. The pressure sensor 86 detects the discharge pressure of the hydraulic pump 3 on the discharge line 62. The pressure sensors 87a, 87b detect the actuator pressure on actuator lines 72a, 72b connected to the boom cylinder 214. The pressure sensors 88a, 88b detect the actuator pressure on actuator lines 73a, 73b connected to the arm cylinder 215. The pressure sensors 89a, 89b detect the actuator pressure on actuator lines 74a, 74b connected to the bucket cylinder 216. The pressure sensors 90a, 90b detect the actuator pressure on actuator lines 75a, 75b connected to the swing motor 206. To avoid an overly complicated explanation, the pressure sensors that detect the actuator pressure of the left travel motor, right travel motor, and attachment, which are not illustrated, are not illustrated herein.

The pressure sensor 133 detects the flow rate control command pressure output from the solenoid valve 113a to the flow rate control command pressure port 2a on the pilot line 123. The pressure sensors 134, 135 detect the command pressure output from the solenoid valves 113b, 113c to the command pressure ports 11a, 11b on the pilot lines 124, 125, respectively. The pressure sensor 136 detects the command pressure output from the solenoid valve 113d to the command pressure port 25j on the pilot line 126. The pressure sensor 137 detects the command pressure output from the solenoid valve 113e to the command pressure port 35a on the pilot line 127.

To avoid an overly complicated explanation, the pressure sensors that detect the command pressure of the solenoid valves for the hydraulic pump 1, hydraulic pump 3, right travelling directional control valve 6, bucket directional control valve 7, second arm directional control valve 8, first boom directional control valve 9, second boom directional control valve 10, first attachment directional control valve 12, left travelling directional control valve 13, swing directional control valve 14, third boom directional control valve 15, second attachment directional control valve 16, bucket flow rate control valve 21, second arm flow rate control valve 22, first boom flow rate control valve 23, second boom flow rate control valve 24, first attachment flow rate control valve 26, swing flow rate control valve 27, third boom flow rate control valve 28, second attachment flow rate control valve 29, bleed off valve 34, bleed off valve 36, and merging valve 37 are not illustrated herein.

The hydraulic drive system 100 includes temperature sensors 91, 92. The temperature sensors 91, 92 detect the temperature of the hydraulic oil and output temperature signals indicating the detected temperature to the controller 114. The temperature sensor 91 detects the temperature of the hydraulic oil stored in the hydraulic oil tank 4. The temperature sensor 92 detects the temperature of the hydraulic oil flowing through the oil passage 121.

The hydraulic drive system 100 includes posture sensors 222, 223, 224, 225, 226. The posture sensors 222 to 226 detect the posture of the hydraulic excavator 200 or those of the hydraulic actuators and output posture signals indicating the detected posture to the controller 114. The posture sensors 222 to 224 are, for example, stroke sensors that detect the posture (amount of extension/contraction) of the boom cylinder 214, arm cylinder 215, and bucket cylinder 216. The posture sensor 225 is, for example, an inclination sensor that detects the posture of the hydraulic excavator 200 (vehicle body). The posture sensor 226 is, for example, a rotation angle sensor that detects the rotation angle (swing angle) of the swing motor 206.

The hydraulic drive system 100 includes current sensors 143, 144, 145, 146, 147. The current sensors 143 to 147 detect the magnitude of the command current output from the controller 114 to the solenoid valves 113a to 113e and output current signals indicating the detected magnitude of the command current to the controller 114.

To avoid an overly complicated explanation, the current sensors that detect the control current output to the solenoid valves for the hydraulic pump 1, hydraulic pump 3, right travelling directional control valve 6, bucket directional control valve 7, second arm directional control valve 8, first boom directional control valve 9, second boom directional control valve 10, first attachment directional control valve 12, left travelling directional control valve 13, swing directional control valve 14, third boom directional control valve 15, second attachment directional control valve 16, bucket flow rate control valve 21, second arm flow rate control valve 22, first boom flow rate control valve 23, second boom flow rate control valve 24, first attachment flow rate control valve 26, swing flow rate control valve 27, third boom flow rate control valve 28, second attachment flow rate control valve 29, bleed off valve 34, bleed off valve 36, and merging valve 37 are not illustrated herein.

The hydraulic drive system 100 includes the operation lever 115a capable of switching the first boom directional control valve 9, the second boom directional control valve 10, and the third boom directional control valve 15, and the operation lever 115b capable of switching the first arm directional control valve 11 and the second arm directional control valve 8. The operation levers 115a, 115b are examples of operation devices. The operation levers 115a, 115b output operation signals indicating the operation direction (tilt direction) and operation amount (tilt amount) applied by the operator to the controller 114.

To simplify the explanation, a right travelling operation lever for switching the right travelling directional control valve 6, a bucket operation lever for switching the bucket directional control valve 7, a first attachment operation lever for switching the first attachment directional control valve 12, a left travelling operation lever for switching the left travelling directional control valve 13, a swing operation lever for switching the swing directional control valve 14, and a second attachment operation lever for switching the second attachment directional control valve 16 are not illustrated herein.

The controller 114 includes a CPU (Central Processing Unit) and a memory. The memory includes, for example, ROM (Read Only Memory), RAM (Random Access Memory), HDD (Hard Disk Drive), or a combination thereof. The controller 114 realizes the processes which will be described later by having the CPU read and execute program codes stored in the ROM or HDD. The RAM is used as a work area while the CPU is executing programs.

However, the specific configuration of the controller 114 is not limited to the one described above, and it may be realized by hardware such as ASIC (Application Specific Integrated Circuit) or FPGA (Field-Programmable Gate Array).

The controller 114 is mounted on the hydraulic excavator 200 (vehicle body). The controller 114 adjusts (increases or decreases) the command current output to the solenoid valves 113a to 113e included in the solenoid valve unit 113 based on the operation signals output from the operation levers 115a, 115b, the pressure signals output from the pressure sensors 84 to 90 and 133 to 137, the temperature signals output from the temperature sensors 91, 92, the current signals output from the current sensor 143 to 147, and the posture signals output from the posture sensors 221 to 226.

The solenoid valves 113a to 113e (and solenoid valves not illustrated) reduce the primary pilot pressure and output it as command pressure based on the command current output from the controller 114. In the present embodiment, the pilot pressure output through the solenoid valves 113a to 113e increases as the command current output from the controller 114 increases. Conversely, the pilot pressure output through the solenoid valves 113a to 113e decreases as the command current output from the controller 114 decreases. However, the relationship between the command current and the pilot pressure is not limited to the example described above.

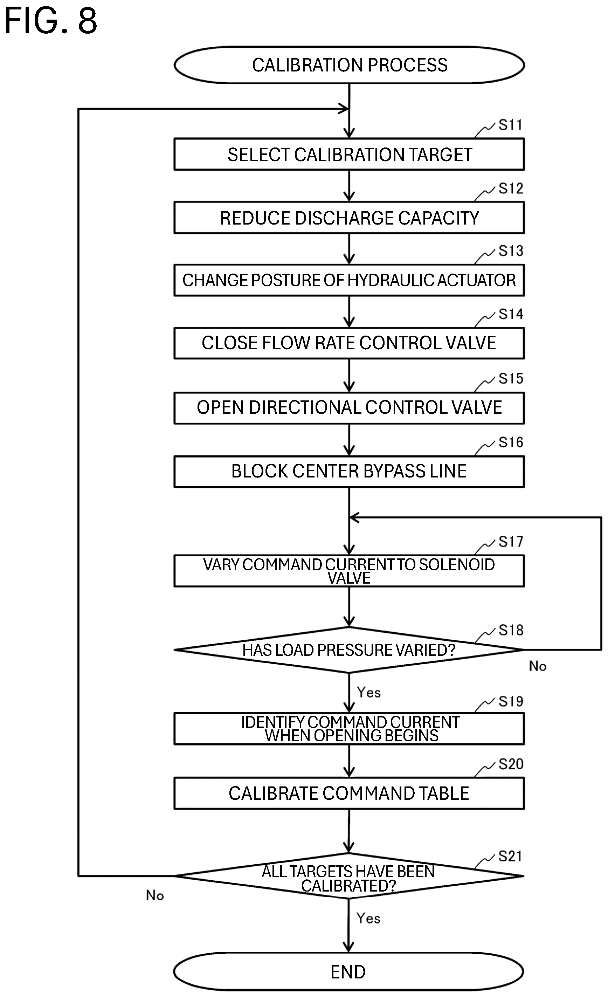

The hydraulic drive system 100 includes a calibration instruction device 116 (instruction device). The calibration instruction device 116 accepts an execution instruction for a calibration process (FIG. 8) from the operator and inputs the accepted execution instruction to the controller 114. For example, the calibration instruction device 116 may be a part of the operation device installed inside the cab 208 (for example, a push button or an icon displayed on a touch panel display).

In another example, the calibration instruction device 116 may be configured as a portable device (for example, a tablet terminal, a smartphone, a feature phone, or a laptop computer) that is attachable to and detachable from the controller 114 (first controller) mounted on the hydraulic excavator 200. Such a portable device includes at least a second controller and a user interface (for example, a display or an operation panel). The second controller is configured in the same manner as the controller 114. The second controller may be configured to instruct the controller 114 to execute the calibration process according to the operator's instructions through the user interface. Furthermore, the first and second controllers may share the execution of the calibration process, which will be described later with reference to FIG. 8.

### [Configuration of flow rate control valve 25]

FIG. 4 is a cross-sectional view of the flow rate control valve 25. As illustrated in FIG. 4, the first arm flow rate control valve 25 mainly includes a main housing 151, a pilot housing 152, a main poppet 153 (main valve), a pilot spool 154, coil springs 155, 158, 159, and a ball check 156. The main housing 151 and the pilot housing 152 are examples of housings. Since the configurations of the flow rate control valves 21 to 29 are the same, in the following, the configuration of the first arm flow rate control valve 25 will be described. The configuration of the flow rate control valves 21 to 29 mounted on the hydraulic drive system 100 is not limited to the example illustrated in FIG. 4.

Inside the main housing 151, a first pressure chamber 161, a second pressure chamber 173, and a third pressure chamber 166 are formed. The first pressure chamber 161, the second pressure chamber 173, and the third pressure chamber 166 are spaces through which the hydraulic oil can pass. The first pressure chamber 161 is connected to the oil passage 56 (supply line on the hydraulic pump 2 side). The second pressure chamber 173 is connected to the oil passage 57 (supply line on the first arm directional control valve 11 side). The third pressure chamber 166 is disposed opposite the first pressure chamber 161 in the movement direction of the main poppet 153.

Inside the pilot housing 152, pilot pressure chambers 168, 170, pilot oil passages 167, 171, 172, and pilot ports 174, 175 are formed. The pilot pressure chambers 168, 170, the pilot oil passages 167, 171, 172, and the pilot ports 174, 175 are spaces through which the hydraulic oil can pass.

The pilot pressure chambers 168, 170 are spaces for accommodating the pilot spool 154. The pilot oil passage 167 is an oil passage that connects the third pressure chamber 166 and the pilot pressure chambers 168, 170. The pilot oil passages 171, 172 are oil passages that connect the pilot pressure chambers 168, 170 and the second pressure chamber 173. The pilot pressure chambers 168, 170 and the pilot oil passages 167, 171, 172 are examples of pilot lines. The pilot port 174 is connected to the hydraulic oil tank 4. The pilot port 175 is connected to the oil passage 121 of the pilot pump 111 via the solenoid valve 113d.

The main poppet 153 moves within the main housing 151 in a direction to connect or disconnect the first pressure chamber 161 and the second pressure chamber 173 according to the pressure difference between the first pressure chamber 161 and the third pressure chamber 166. More specifically, as the pressure in the first pressure chamber 161 becomes greater than that in the third pressure chamber 166, the main poppet 153 moves in a direction to connect the first pressure chamber 161 and the second pressure chamber 173. Conversely, as the pressure in the third pressure chamber 166 becomes greater than that in the first pressure chamber 161, the main poppet 153 moves in a direction to disconnect the first pressure chamber 161 and the second pressure chamber 173.

The first pressure chamber 161 and the second pressure chamber 173 are connected with each other via a variable restriction formed in the main housing 151. The main poppet 153 is seated on the main housing 151 (i.e., disconnects the first pressure chamber 161 and the second pressure chamber 173) by the coil spring 155 provided in the third pressure chamber 166. The main poppet 153 always disconnects the second pressure chamber 173 and the third pressure chamber 166. Furthermore, the main poppet 153 connects the first pressure chamber 161 and the third pressure chamber 166 via communication passages 163, 164 and a variable control restriction 165.

In the main poppet 153, the communication passages 163, 164 and the variable control restriction 165 are formed. The communication passages 163, 164 and the variable control restriction 165 are spaces through which the hydraulic oil can pass. The communication passages 163, 164 connect the first pressure chamber 161 and the third pressure chamber 166 through the inside of the main poppet 153. The variable control restriction 165 is formed at the end of the communication passage 164 on the third pressure chamber 166 side (i.e., at a position facing the third pressure chamber 166 and the inner wall of the main housing 151). The opening area of the variable control restriction 165 varies in conjunction with the movement of the main poppet 153. More specifically, the opening area of the variable control restriction 165 increases as the pressure in the third pressure chamber 166 decreases. Conversely, the opening area of the variable control restriction 165 decreases as the pressure in the third pressure chamber 166 increases.

The communication passage 163 accommodates the ball check 156 and the coil spring 158. The ball check 156 is biased by the coil spring 158 in a direction to close the communication passage 163. The ball check 156 opens the communication passage 163 when the pressure in the first pressure chamber 161 is greater than that in the third pressure chamber 166. Conversely, the ball check 156 closes the communication passage 163 when the pressure in the third pressure chamber 166 is greater than that in the first pressure chamber 161.

The pilot spool 154 opens and closes the pilot pressure chambers 168, 170 (i.e., pilot lines) by the pilot pressure supplied via the solenoid valve 113d. More specifically, the pilot spool 154 reduces the opening amount of the pilot pressure chambers 168, 170 as the pilot pressure supplied to the pilot port 175 increases. Conversely, the pilot spool 154 increases the opening amount of the pilot pressure chambers 168, 170 as the pilot pressure supplied to the pilot port 175 decreases. Furthermore, the pilot spool 154 is biased by the coil spring 159 in a direction to open the space between the pilot pressure chambers 168, 170.

The first pressure chamber 161 and the second pressure chamber 173 are connected with each other via a variable restriction formed in the main housing 151. In the main poppet 153, a notch 162 that forms the opening characteristics of the variable restriction. The opening characteristics of the pilot line are adjusted by a throttle provided between the pilot pressure chambers 168, 170 and a notch 169 provided in the pilot spool 154. Furthermore, as the notches 162, 169 and the variable control restriction 165, various combinations of shapes other than those illustrated in the drawings can be employed to obtain desired opening characteristics by a designer.

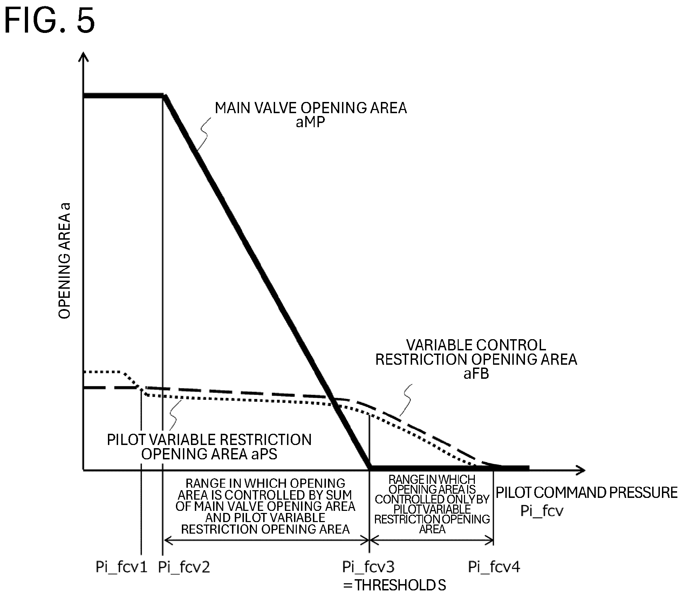

FIG. 5 is an opening area characteristic diagram of the flow rate control valve 25. More specifically, FIG. 5 illustrates the changes in the opening areas of the pilot spool 154, variable control restriction 165, and main poppet 153 with respect to a command pressure Pi_fcv of the first arm flow rate control valve 25. The other flow rate control valves are configured in the same manner.

An opening area aPS of the pilot spool 154 and an opening area aFB of the variable control restriction 165 have opening control ranges where the command pressure Pi_fcv varies from Pi_fcv1 to Pi_fcv4. An opening area aMP of the main poppet 153 has an opening control range where the command pressure Pi_fcv varies from Pi_fcv2 (>Pi_fcv1) to Pi_fcv3 (<Pi_fcv4). A maximum opening area aMP1 of the main poppet 153 is set sufficiently larger than the opening area aPS of the pilot spool 154 and the opening area aFB of the variable control restriction 165. That is, the opening amount of the first arm flow rate control valve 25 decreases as the command pressure Pi_fcv increases, and increases as the command pressure Pi_fcv decreases. However, the relationship between the command pressure Pi_fcv and the opening amount of the first arm flow rate control valve 25 is not limited to the example above.

While the command pressure Pi_fcv is between Pi_fcv2 and Pi_fcv3, the opening amount of the first arm flow rate control valve 25 is equal to the sum of the opening area aMP of the main poppet 153 and the opening area aPS of the pilot spool 154. That is, when the opening amount of the pilot pressure chambers 168, 170 by the pilot spool 154 is equal to or greater than a threshold S, the first arm flow rate control valve 25 supplies the hydraulic oil to the first arm directional control valve 11 through the first pressure chamber 161 and the second pressure chamber 173 connected by the main poppet 153, and through the first pressure chamber 161, the communication passages 163, 164, the third pressure chamber 166, and the pilot lines (167, 168, 170, 171, 172).

On the other hand, while the command pressure Pi_fcv is between Pi_fcv3 and Pi_fcv4, the opening area aMP of the main poppet 153 becomes zero. Therefore, the opening amount of the first arm flow rate control valve 25 becomes equal to the opening area aPS of the pilot spool 154. That is, in the first arm flow rate control valve 25, when the opening amount of the pilot pressure chambers 168, 170 by the pilot spool 154 is less than the threshold S, the first pressure chamber 161 and the second pressure chamber 173 are disconnected by the main poppet 153, and the hydraulic oil is supplied to the first arm directional control valve 11 through the first pressure chamber 161, the communication passages 163, 164, the third pressure chamber 166, and the pilot lines (167, 168, 170, 171, 172).

As described above, in response to the command pressure Pi_fcv, the first arm flow rate control valve 25 has the range in which the opening amount is controlled by the sum of the opening area aMP of the main poppet 153 and the opening area aPS of the pilot spool 154, and the region in which the opening amount is controlled only by the opening area aPS of the pilot spool 154, and these ranges switch based on the predetermined setpoint command pressure Pi_fcv3.

### [Functional block of controller 114]

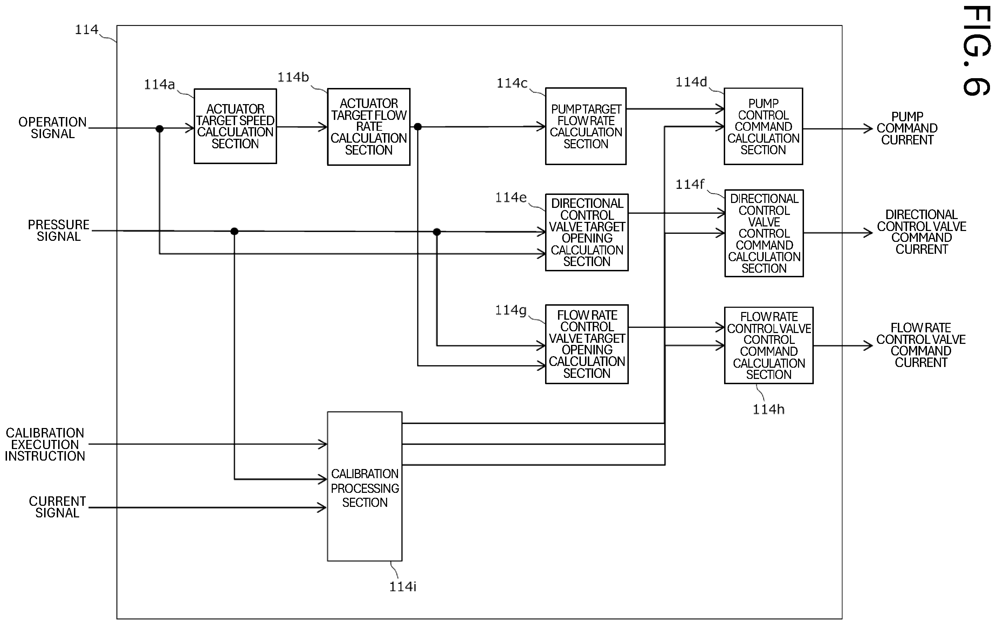

FIG. 6 is a functional block diagram of the controller 114. As illustrated in FIG. 6, the controller 114 includes an actuator target speed calculation section 114ya, an actuator target flow rate calculation section 114b, a pump target flow rate calculation section 114c, a pump control command calculation section 114d, a directional control valve target opening calculation section 114e, a directional control valve control command calculation section 114f, a flow rate control valve target opening calculation section 114g, a flow rate control valve control command calculation section 114h, and a calibration processing section 114i.

In the following, an example of controlling the hydraulic pump 2, the first arm directional control valve 11 (hereinafter simply referred to as "directional control valve 11"), the first arm flow rate control valve 25 (hereinafter simply referred to as "flow rate control valve 25"), and the arm cylinder 215 will be described, and the same control applies to the other hydraulic pumps, directional control valves, flow rate control valves, and hydraulic actuators.

The actuator target speed calculation section 114a calculates the target speed of the arm cylinder 215 based on the operation signal output from the operation lever 115b. The actuator target flow rate calculation section 114b calculates the target flow rate of the hydraulic oil to be supplied to the arm cylinder 215 based on the actuator target speed calculated by the actuator target speed calculation section 114a. The pump target flow rate calculation section 114c calculates the pump target flow rate of the hydraulic oil to be discharged by the hydraulic pump 2 based on the actuator target flow rate calculated by the actuator target flow rate calculation section 114b. The pump control command calculation section 114d calculates the pump command current based on the pump target flow rate calculated by the pump target flow rate calculation section 114c and outputs the pump command current to the solenoid valve 113a that supplies the pilot pressure to the flow rate control command pressure port 2a. As a result, the discharge capacity of the hydraulic pump 2 is set according to the operation amount of the operation lever 115b. The discharge capacity of the hydraulic pump 2 increases as the operation amount of the operation lever 115b increases.

The directional control valve target opening calculation section 114e calculates the directional control valve target opening based on the operation signal output from the operation lever 115b and the pressure signals output from the pressure sensors 84 to 90 and 133 to 137. The directional control valve control command calculation section 114f calculates the directional control valve command current based on the directional control valve target opening calculated by the directional control valve target opening calculation section 114e and outputs the calculated directional control valve command current to the solenoid valves 113b, 113c. As a result, the supply direction of the hydraulic oil from the directional control valve 11 to the arm cylinder 215 is set according to the operation direction of the operation lever 115b.

The flow rate control valve target opening calculation section 114g calculates the final target opening that can ensure the flow rate control accuracy based on the actuator target flow rate calculated by the actuator target flow rate calculation section 114b, the pressure signals output from the pressure sensors 84 to 90 and 133 to 137, and a predetermined limit opening area. The flow rate control valve control command calculation section 114h calculates the flow rate control valve command current based on the flow rate control valve target opening calculated by the flow rate control valve target opening calculation section 114g and outputs the calculated flow rate control valve command current to the solenoid valve 113d. As a result, the flow rate of the hydraulic oil to be supplied from the flow rate control valve 25 to the directional control valve 11 is set according to the operation amount of the operation lever 115b. The flow rate of the hydraulic oil supplied from the flow rate control valve 25 to the directional control valve 11l increases as the operation amount of the operation lever 115b increases.

The calibration processing section 114i outputs target control commands for executing the calibration process to the pump control command calculation section 114d, the directional control valve control command calculation section 114f, and the flow rate control valve control command calculation section 114h based on the calibration execution instruction output from the calibration instruction device 116. The calibration processing section 114i also adjusts (calibrates) the opening start current at which the flow rate control valve 25 starts opening based on the pressure signals output from the pressure sensors 84 to 90 and 133 to 137 and the current signals output from the current sensor 143 to 147.

### [Performance error of solenoid valve 113d]

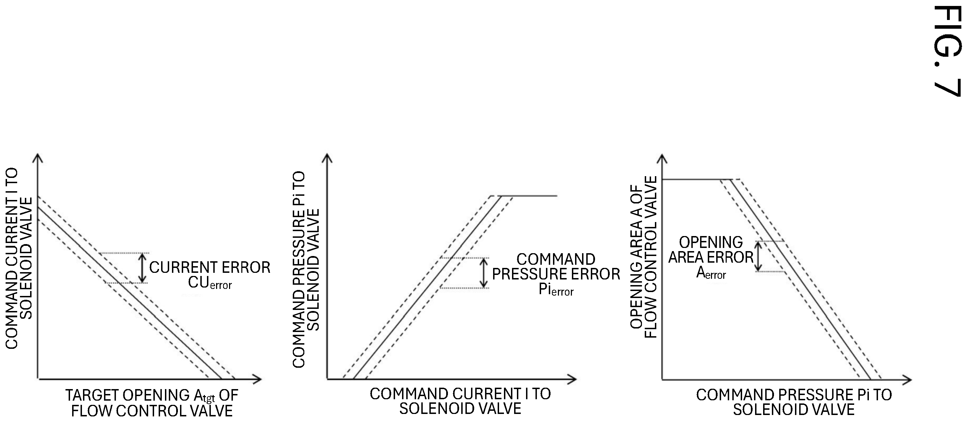

FIG. 7 is an explanatory diagram of a performance error of the solenoid valve 113d. More specifically, in the left part of FIG. 7, the correspondence between a target opening Atgt of the flow rate control valve 25 and a command current I to the solenoid valve 113d is illustrated. In the center part of FIG. 7, the correspondence between the command current I to the solenoid valve 113d and a command pressure Pi of the solenoid valve 113d is illustrated. In the right part of FIG. 7, the relationship between the command pressure Pi of the solenoid valve 113d and an opening area A of the flow rate control valve 25 is illustrated.

The controller 114 calculates the command current I corresponding to the target opening Atgt based on the predetermined correspondence between the target opening Atgt and the command current I (left part in FIG. 7) and outputs it to the solenoid valve 113d. Here, due to manufacturing variations of the controller 114 and the like, a current error CUerror may occur between the command current I calculated based on the correspondence illustrated in the left part of FIG. 7 and the actual output command current I.

Furthermore, as illustrated in the center part of FIG. 7, the solenoid valve 113d outputs the command pressure Pi corresponding to the command current I output from the controller 114. Here, due to manufacturing variations of the solenoid valve 113d and the like, a command pressure error Pierror may occur between the command current I and the command pressure Pi. Still further, as illustrated in the right part of FIG. 7, the flow rate control valve 25 is set to the opening area A corresponding to the command pressure Pi output from the solenoid valve 113d. Here, due to manufacturing variations of the flow rate control valve 25 and the like, an opening area error Aerror may occur between the command pressure Pi and the opening area A.

That is, an error equal to the sum of the current error CUerror, command pressure error Pierror, and opening area error Aerror may occur between the target opening Atgt calculated by the controller 114 and the actual opening area A. Therefore, the controller 114 needs to execute the calibration process illustrated in FIG. 8 to correct this error.

### [Calibration process]

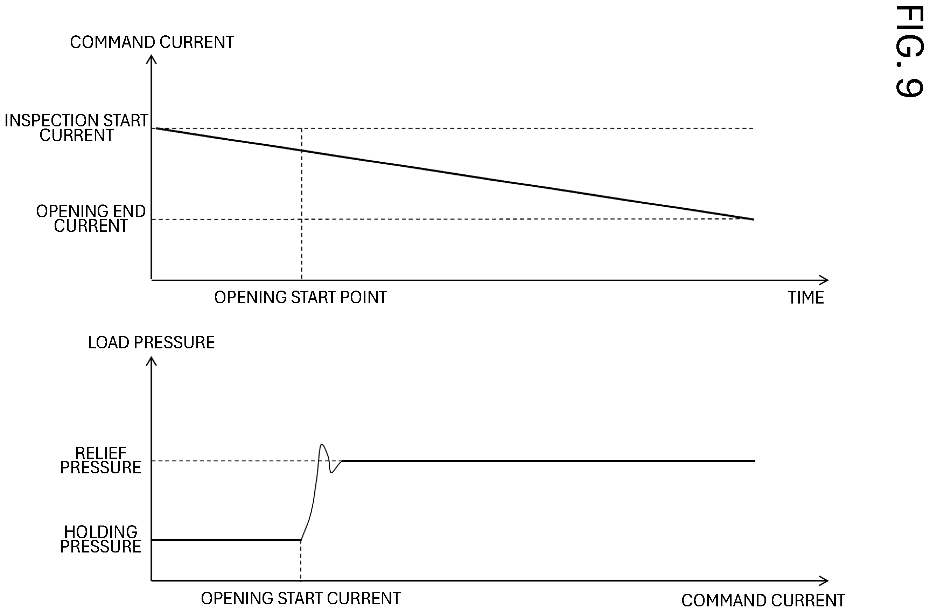

FIG. 8 is a flowchart of a calibration process. FIG. 9 is a diagram illustrating temporal variation of a command current and change in load pressure with respect to the command current during the calibration process. The operator may execute the calibration process, for example, at the time of assembly completion of the hydraulic excavator 200, during periodic maintenance, or at the time of replacing parts. In the following, the calibration process for the flow rate control valve 25 will be described, and the same applies to the other flow rate control valve 21 to 24 and 26 to 29.

First, the calibration instruction device 116 displays a list of the flow rate control valves 21 to 29 on the display and allows the operator to select a target for calibration through the operation panel (S11). Here, it is assumed that the flow rate control valve 25 has been selected. The calibration instruction device 116 identifies the flow rate control valve 25 selected by the operator and outputs a calibration execution instruction to the controller 114. In another example, the calibration instruction device 116 may automatically select the plurality of flow rate control valves 21 to 29 in a predetermined order and output calibration execution instructions.

Next, the controller 114 outputs a pump command current to the solenoid valve 113a so that the discharge capacity of the hydraulic pump 2 is reduced to a predetermined value or less (S12). In step S12, it is desirable to reduce the discharge capacity of the hydraulic pump 2 as much as possible within the range in which the arm cylinder 215 can be driven (i.e., the calibration process can be executed).

Next, the controller 114 controls the hydraulic pump 2, the directional control valve 11, and the flow rate control valve 25 to change the posture of the arm cylinder 215 to a predetermined posture (S13). This process may be executed automatically by the controller 114, or the operator in the cab 208 may be prompted to operate the operation device through the display.

For example, the predetermined posture is a posture in which the arm cylinder 215 would not move under its own weight even when the meter-out side of the directional control valve 11 is connected to the tank line during the calibration process. In another example, the predetermined posture is a posture in which the operation range of the arm cylinder 215 is limited during the calibration process, and more specifically, a position reached by retracting by a predetermined amount from the crowd-side stroke end to the dump side. In other words, the controller 114 causes the arm cylinder 215 to extend (move) to the stroke end and then slightly retract (contract) to a predetermined position away from the stroke end.

In the case where the boom cylinder 214 is the target, it is a position reached by retracting by a predetermined amount from the boom-up stroke end. In the case where the bucket cylinder 216 is the target, it is a position reached by retracting by a predetermined amount from the crowd stroke end. In the case where the travel motor 205 or the swing motor 206 is the target, the posture does not have to be changed to a predetermined posture in this step since it is assumed that, before executing the calibration process, the operator places it on a level surface where the actuator would not move under its own weight even if the meter-out side of the directional control valve is connected the tank line. The predetermined amount is a stroke amount sufficient and necessary to return the load pressure, which is increased to a relief pressure set by the relief valve installed in the pump line when it was moved to the cylinder stroke end, to an actuator holding pressure.

Next, the controller 114 sets the command current to be output to the solenoid valve 113d to the maximum (i.e., Pi_fcv4) to close the flow rate control valve 25 (S14). This causes the flow between the oil passages 56, 57 to be blocked, and thus the hydraulic oil discharged from the hydraulic pump 2 is not supplied to the directional control valve 11 through the flow rate control valve 25.

Next, the controller 114 outputs the command current to the solenoid valves 113b, 113c to open the directional control valve 11 so that the hydraulic oil is supplied to the arm cylinder 215 in the extending direction (S15). Next, the controller 114 blocks the center bypass line 52 (S16). This causes the pressure in the parallel line 53 to increase up to the relief pressure of the relief valve 32.

For example, the controller 114 may output the command current to the solenoid valve 113e to close the bleed off valve 35. In another example, the directional control valve 11 may be configured to block the center bypass line 52 when switched to supply the hydraulic oil to the arm cylinder 215. In this case, the directional control valve 11 is another example of the opening and closing device. In this case, switching of the bleed off valve 35 is not required.

Next, the controller 114 gradually varies the command current to be output to the solenoid valve 113d in a direction to open the flow rate control valve 25 (S17). In the present embodiment, the command current gradually decreases. More specifically, the controller 114 gradually reduces the command current within the range in which the main poppet 153 blocks the space between the first pressure chamber 161 and the second pressure chamber 173, and the oil passages 56, 57 remain blocked (i.e., from Pi_fcv4 to Pi_fcv3).

Next, the controller 114 monitors the variation in the load pressure indicated by the pressure signal from the pressure sensor 88a (S18). In other words, the controller 114 gradually reduces the command current (upper part in FIG. 9) until the load pressure detected by the pressure sensor 88a changes (lower part in FIG. 9). Then, the controller 114 identifies the command current at the time when the load pressure detected by the pressure sensor 88a varies (increases) as the opening start current at which the flow rate control valve 25 starts opening (S18: Yes → S19).

Then, the controller 114 executes calibration using the opening start current identified in step S19 (S20). For example, the controller 114 adjusts the correspondence between the target opening Atgt and the command current I illustrated in the left part of FIG. 7 using the opening start current. More specifically, the controller 114 shifts the solid line illustrated in the left part of FIG. 7 in parallel so that the intercept of the command current I matches the opening start current.

Next, the controller 114 determines whether any other flow rate control valves 21 to 29 to be calibrated remain (S21). Upon determining that any of the flow rate control valves 21 to 29 remains uncalibrated (S21: No), the controller 114 repeats the process starting from step S11. On the other hand, upon determining that calibration has been performed for all the flow rate control valves 21 to 29 (S21: Yes), the controller 114 ends the calibration process.

According to the embodiment above, for example, the following operations and effects can be achieved.

According to the embodiment above, since the pressure sensors 88a, 88b that detect the pressure of the hydraulic oil supplied to the arm cylinder 215 are used, the calibration process can be executed without attaching dedicated components to the hydraulic excavator 200.

According to the embodiment above, by gradually reducing the command current to the solenoid valve 113d while the discharge capacity of the hydraulic pump 2 is minimized and the pressure in the parallel line 53 is increased up to the relief pressure, the pilot spool 154 is gradually displaced, and eventually the pilot pressure chambers 168, 170 open (are connected). At this time, the discharge capacity of the hydraulic pump 2 is suppressed to the minimum necessary, and the oil passages 56, 57 are connected to each other only through the pilot lines (167, 168, 170, 171, 172) of the flow rate control valve 25. As a result, vibration of the vehicle body due to sudden operation of the arm cylinder 215 is suppressed, which enables the changes in the load pressure of the arm cylinder 215 to be measured with high accuracy.

According to the embodiment above, since the arm cylinder 215 reaches the stroke end from a predetermined position with the minimum necessary stroke, after the flow rate control valve 25 opens, the pressure is increased from the holding pressure to the relief pressure in a short time, making it easy to measure the changes in the load pressure.

According to the embodiment above, by minimizing the flow rate of the hydraulic oil to be supplied to the arm cylinder 215 and the stroke amount of the arm cylinder 215, the amount of operation of the hydraulic excavator 200 during the calibration process is minimized. As a result, the impact on the surroundings during execution of the calibration process can be reduced.

Furthermore, according to the embodiment above, by executing calibration with the arm cylinder 215 in a posture in which it does not move under its own weight, it is possible to prevent the arm cylinder 215 from operating when the directional control valve 11 is opened.

The embodiments described above are examples for explaining the present invention, and the scope of the present invention is not limited only to the embodiments described above. Those skilled in the art can implement the present invention in various other forms without departing from the spirit and scope of the present invention.

### REFERENCE SIGNS LIST

1, 2, 3: Hydraulic pump
1a, 2a, 3a: Flow rate control command pressure port
6 to 16: Directional control valve
11a, 11b, 35a: Command pressure port
21 to 29: Flow rate control valve
31 to 33: Relief valve
34, 35, 36: Bleed-off valve
37: Merging valve
38, 39: Check valve
41, 51, 62: Discharge line
42, 52, 63: Center bypass line
43, 53, 64: Parallel line
72 to 75: Actuator line
84 to 90, 133 to 137: Pressure sensor
91 to 92: Temperature sensor
100: Hydraulic drive system
111: Pilot pump
112: Pilot relief valve
113: Solenoid valve unit
113a to 113e: Solenoid valve
114: Controller
114a: Actuator target speed calculation section
114b: Actuator target flow rate calculation section
114c: Pump target flow rate calculation section
114d: Pump control command calculation section
114e: Directional control valve target opening calculation section
114f: Directional control valve control command calculation section
114g: Flow rate control valve target opening calculation section
114h: Flow rate control valve control command calculation section
114i: Calibration processing section
115a, 115b: Operation lever
116: Calibration instruction device
123 to 127: Pilot line
143 to 147: Current sensor
151: Main housing
152: Pilot housing
153: Main poppet
154: Pilot spool
155, 158, 159: Coil spring
156: Ball check
161: First pressure chamber
162, 169: Notch
163, 164: Communication passage
165: Variable control restriction
166: Third pressure chamber
167, 171, 172: Pilot oil passage
168, 170: Pilot pressure chamber
173: Second pressure chamber
174, 175: Pilot port
200: Hydraulic excavator
201: Undercarriage
202: Upperstructure
204: Crawler
205: Travel motor
206: Swing motor
207: Swing frame
208: Cab
209: Counterweight
210: Front working device
211: Boom
212: Arm
213: Bucket
214: Boom cylinder
215: Arm cylinder
216: Bucket cylinder
221, 226: Posture sensor

## Claims

1. A hydraulic drive system comprising:
a hydraulic pump that discharges a hydraulic oil stored in a hydraulic oil tank;
a hydraulic actuator driven by the hydraulic oil discharged from the hydraulic pump;
a directional control valve disposed in a supply line extending from the hydraulic pump to the hydraulic actuator, and controlling a supply direction of the hydraulic oil to the hydraulic actuator;
a flow rate control valve disposed upstream of the directional control valve in the supply line of the hydraulic oil, and controlling a flow rate of the hydraulic oil to be supplied from the hydraulic pump to the directional control valve;
a pressure sensor that detects a pressure of the hydraulic oil to be supplied to the hydraulic actuator;
a solenoid valve that opens and closes the flow rate control valve by supplying a pilot pressure to a pilot port of the flow rate control valve; and
a controller configured to execute a calibration process to adjust a command current to be output to the solenoid valve,
wherein, in the calibration process, the controller:
varies the command current to be output to the solenoid valve in a direction to open the flow rate control valve, with the flow rate control valve closed and the directional control valve opened; and
identifies the command current at a time when the pressure detected by the pressure sensor changes as an opening start current at which the flow rate control valve starts opening.

2. The hydraulic drive system according to claim 1, further comprising an opening and closing device that opens and closes a bypass line extending from the hydraulic pump to the hydraulic oil tank via the directional control valve,
wherein, in the calibration process, the controller varies the command current to be output to the solenoid valve in the direction to open the flow rate control valve, with the flow rate control valve closed, the directional control valve opened, and the opening and closing device closed.

3. The hydraulic drive system according to claim 1,
wherein, in the calibration process, the controller varies the command current to be output to the solenoid valve in the direction to open the flow rate control valve, with the hydraulic actuator moved in a predetermined posture in which the hydraulic actuator does not operate under its own weight.

4. The hydraulic drive system according to claim 3, wherein
the hydraulic pump is of a variable displacement type, and
in the calibration process, the controller reduces a discharge capacity of the hydraulic pump to a predetermined value or less prior to bringing the hydraulic actuator into the predetermined posture.

5. The hydraulic drive system according to claim 1, wherein
the hydraulic actuator is a hydraulic cylinder that extends and contracts in response to supply and discharge of the hydraulic oil, and
in the calibration process, the controller controls the flow rate control valve and the directional control valve to cause the hydraulic cylinder to move to a stroke end and then return it to a predetermined position away from the stroke end, and opens the directional control valve so that the hydraulic cylinder moves toward the stroke end.

6. The hydraulic drive system according to claim 1, further comprising an instruction device configured to instruct execution of the calibration process,
wherein the controller executes the calibration process based on an execution instruction for the calibration process made by the instruction device.

7. The hydraulic drive system according to claim 1, wherein
the flow rate control valve includes:
a housing provided with a first pressure chamber connected to the supply line on a hydraulic pump side, a second pressure chamber connected to the supply line on a directional control valve side, a third pressure chamber disposed opposite the first pressure chamber, and a pilot line connecting the third pressure chamber and the second pressure chamber;
a main valve that moves in a direction to connect or disconnect the first pressure chamber and the second pressure chamber according to a pressure difference between the first pressure chamber and the third pressure chamber; and
a pilot spool that opens and closes the pilot line by the pilot pressure supplied via the solenoid valve,
the main valve is provided with:
a communication passage that connects the first pressure chamber and the third pressure chamber, and
a variable control restriction formed at an end of the communication passage on a third pressure chamber side, whose opening area increases as a pressure in the third pressure chamber decreases, and
the flow rate control valve is configured to:
in a case where an opening amount of the pilot line by the pilot spool is less than a threshold, disconnect the first pressure chamber and the second pressure chamber by the main valve to supply the hydraulic oil to the directional control valve through the first pressure chamber, the communication passage, the third pressure chamber, and the pilot line, and
in a case where the opening amount of the pilot line by the pilot spool is equal to or greater than the threshold, supply the hydraulic oil to the directional control valve through the first pressure chamber and the second pressure chamber connected by the main valve, and through the first pressure chamber, the communication passage, the third pressure chamber, and the pilot line.

8. The hydraulic drive system according to claim 7, wherein
in the calibration process, the controller varies the command current within a range in which the opening amount of the pilot line is less than the threshold.

9. The hydraulic drive system according to claim 1, wherein
the controller includes:
a first controller mounted on the vehicle body; and
a second controller provided in a portable device separate from the vehicle body, and instructing the first controller to execute the calibration process.

10. The hydraulic drive system according to claim 1, wherein
the controller is mounted on a vehicle body.
